Europäisches Patentamt

European Patent Office

Office européen des brevets

(19)

(11) EP 0 870 220 B1

(12) **EUROPÄISCHE PATENTSCHRIFT**

(45) Veröffentlichungstag und Bekanntmachung des Hinweises auf die Patenterteilung:
**01.09.1999 Patentblatt 1999/35**

(21) Anmeldenummer: **96946028.6**

(22) Anmeldetag: **29.11.1996**

(51) Int Cl.⁶: **G05F 1/56**

(86) Internationale Anmeldenummer:
**PCT/DE96/02300**

(87) Internationale Veröffentlichungsnummer:
**WO 97/24649 (10.07.1997 Gazette 1997/30)**

(54) **SCHALTUNGSANORDNUNG ZUR HILFSSPANNUNGSERZEUGUNG**

CIRCUIT FOR THE PRODUCTION OF AN AUXILIARY VOLTAGE

CIRCUIT PERMETTANT DE PRODUIRE UNE TENSION AUXILIAIRE

(84) Benannte Vertragsstaaten:
**CH DE ES FR GB IT LI PT SE**

(30) Priorität: **28.12.1995 DE 19548986**

(43) Veröffentlichungstag der Anmeldung:
**14.10.1998 Patentblatt 1998/42**

(73) Patentinhaber: **SIEMENS AKTIENGESELLSCHAFT**
**80333 München (DE)**

(72) Erfinder: **SEMMLER, Peter**
**D-85368 Moosburg (DE)**

(56) Entgegenhaltungen:
**US-A- 4 660 136          US-A- 5 455 501**

• **PATENT ABSTRACTS OF JAPAN vol. 095, no. 008, 29.September 1995 & JP 07 135768 A (OKI ELECTRIC IND CO LTD), 23.Mai 1995,**

**Beschreibung**

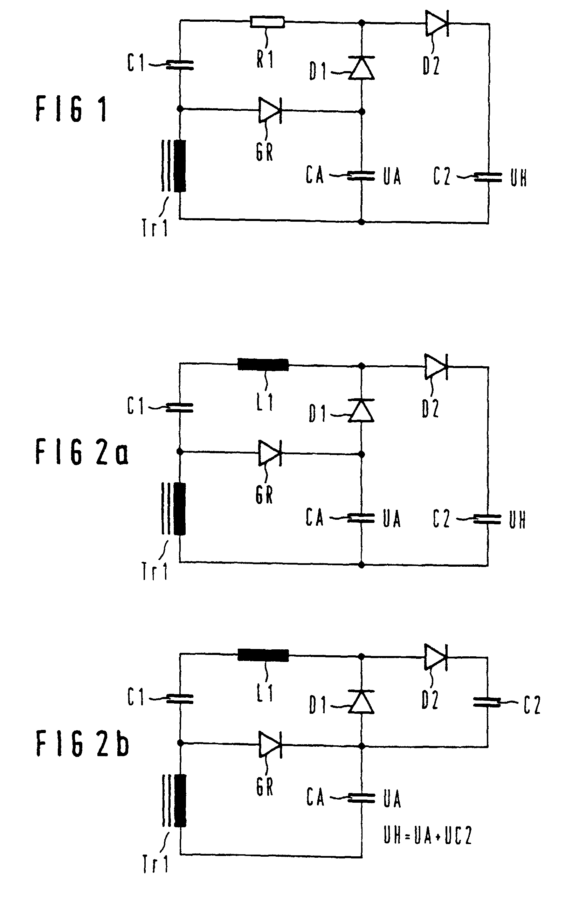

Bei Konvertern werden häufig zusätzliche Hilfsspannungen benötigt, um zum Beispiel einen Ausgangsspannungsregler, eine Überwachungsschaltung oder eine Signalisierungseinheit zu versorgen. Wesentlich bei der Versorgung von Überwachungseinheiten oder Signalisierungseinheiten ist, daß die Hilfsspannungen nicht "hart" an die Spannung des direkt geregelten Ausgangskreis des Konverters gekoppelt ist. Wird die zusätzlich benötigte Hilfsspannung zum Beispiel aus einer weiteren Wicklung eines Übertragers oder einer Speicherdrossel gewonnen, so ist diese Spannung an den direkt geregelten Kreis gekoppelt, daß heißt, daß zum Beispiel bei einem Kurzschluß im direkt geregelten Kreis auch die Hilfsspannung zusammenbricht und keine Ausgangsspannung mehr liefern kann. Um die Hilfsspannung nicht ausschließlich an die direkt geregelten Ausgangsspannung zu koppeln, verwendet man eine während einer Sperrphase am Ausgangsgleichrichter GR anliegende Sperrspannung. Die bekannte Schaltungsanordnung ist in Figur 1 dargestellt. Die nachfolgende Schaltungsbeschreibung bezieht sich auf einen eingeschwungenen Schaltungszustand. Die zur Verfügung stehende Sperrspannung $U_{SpDio}$ an der Sekundärgleichrichterdiode GR während der Sperrphase des Konverters wird über eine Diode D1 gleichgerichtet. Da die Sperrspannung niederohmig am Sekundärgleichrichter GR anliegt, verursacht diese einen hohen Stromanstieg, der von einem Pufferkondensator C1 aufgenommen wird. Damit dieser Stromstoß, eine z.B. vorhandene Current Mode-Regelung des Konverters nicht negativ beeinflußt bzw. die zur Erzeugung der Hilfsspannung verwendeten Bauteile nicht überlastet werden, wird dieser Stromstoß durch einen Widerstand R1 in Reihe zum Puffer- oder Ladekondensator C1 begrenzt. Über diesen Widerstand R1 lädt sich nun der Kondensator C1 auf die an dem Sekundärgleichrichter GR anliegende Sperrspannung auf. Überträgt der Konverter Leistung auf die Sekundärseite, so liegt an der Sekundärwicklung Tr1 eine Spannung $U_A + U_d$.

Das Spannungspotential $U_A$ ist dabei die Ausgangsspannung des Konverters und $U_d$ die Durchlaßspannung der verwendeten Diode. Die Spannung der Sekundärwicklung addiert sich zur Spannung an C1. Der Kondensator C2 der parallel zur Sekundärwicklung Tr1 und der Reihenschaltung, bestehend aus C1, D2 und R1 liegt, lädt sich über den Widerstand R1 und der Diode D2 auf. Am Kondensator C2 ergibt sich:

$$U_H < U_{SpDio} - 2Ud + U_A.$$

Die Abkürzungen sind im einzelnen:

| | |
|---|---|
| $U_H$: | Hilfsspannung, |
| $U_{SpDio}$: | Sperrspannung am Sekundärgleichrichter, |
| 2Ud: | Durchlaßspannung an den Dioden D1, D2 |

und

$U_A$:        Ausgangsspannung am Konverter.

Der unter Umständen erhebliche Spannungsabfall am Widerstand R1, sowie die Ladezeitkonstante von C1 bzw. C2 wurden hier nicht berücksichtigt.

Von Nachteil bei dieser Schaltungsanordnung ist, daß die erzeugte Hilfsspannung $U_H$ in der Praxis meist viel kleiner ist, als der theoretisch angegebene Wert. Weitere Nachteile der zuvor beschriebenen und unter Figur 1 dargestellten Schaltungsanordnung sind nachfolgend zusammengefaßt:

- bei Konvertern mit weiteren Eingangsspannungsbereichen sind die Verluste im Widerstand R1 sehr groß,
- die Schaltungsanordnung weist einen hohen Innenwiderstand auf,
- prinzipbedingt weist die Schaltung einen geringen Wirkungsgrad auf,
- eine schwierige Dimensionierung, vor allem bei weitem Eingangsspannungsbereich des Konverters, bzw. großem Lastbereich am direkt geregelten Ausgang und
- bei kleinen Ausgangsspannungen reicht die Höhe der erzeugten Hilfsspannung oft nicht aus.

Aufgabe der Erfindung ist es, eine Schaltungsanordnung zur Hilfsspannungserzeugung derart auszugestalten, daß die oben aufgeführten Nachteile vermieden werden.

Die Aufgabe wird durch die Merkmale des Patentanspruchs 1 gelöst.

Die Erfindung weist den Vorteil auf, daß nur geringe ohmsche Verluste bzw. durch eine entsprechende Dimensionierung keine zeitliche Abhängigkeit der erzeugten Hilfsspannung entsteht, d.h. unabhängig vom Tastgrad des Umrichters ist.

Weitere vorteilhafte Ausbildungen der Erfindung sind in den Unteransprüchen angegeben.

Weitere Besonderheiten der Erfindungen werden aus der nachfolgenden näheren Erläuterung eines Ausführungsbeispieles anhand von schematischen Zeichnungen ersichtlich.

Es zeigen:

| | |
|---|---|
| Figur 1 | eine bekannte Schaltungsanordnung, |
| Figur 2a, 2b | Schaltungsanordnung zur Hilfsspannungs erzeugung, |
| Figur 3a, 3b | weitere Schaltungsvarianten zur Hilfs spannungserzeugung für einen Sperrwandler, |
| Figur 4a, 4b | weitere Schaltungsvarianten zur Hilfs spannungserzeugung für einen Flußwandler und |
| Figur 5a, 5b | weitere Schaltungsvarianten. |

Die in Figur 1 dargestellte Schaltungsanordnung stellt den Stand der Technik dar und ist in der Beschreibungseinleitung bereits beschrieben worden.

Bei der in Figur 2a dargestellten Schaltungsanordnung wird eine Hilfsspannung $U_H$ durch eine leicht zu dimensionierende resonante Schaltung mit einem hohen Wirkungsgrad und mit einem niedrigen Ausgangswiderstand erzeugt. Bei dieser Schaltungsanordnung wird, wie bei der unter Fig. 1 beschriebenen Schaltungsanordnung die Sperrspannung $U_{SpDio}$ am Sekundärgleichrichter GR ausgenutzt. Die Sperrspannung $U_{SpDio}$ liegt im Gegensatz zu der in der Beschreibungseinleitung beschriebenen Schaltungsanordnung nicht an der Serienschaltung RC sondern an einer Serienschaltung bestehend aus einer Induktivität L1 und einer Kapazität C1. Die Eigenfrequenz der Serienschaltung ist dabei so dimensioniert, daß das kürzest mögliche Tastverhältnis des Konverters größer ist als die halbe Periodendauer des Serienschwingkreises LC. Durch diese erfindungsgemäße Schaltungsausprägung wird eine maximale Aufladung des Kondensators C1 und damit auch eine maximale Aufladung des Kondensators C2 erreicht. Ein "Zurückschwingen" des Spannungspotentials wird durch die Diode D1 verhindert. Durch die Dimensionierung der Induktivität L1 und der Kapazität C1 kann der maximal auftretende Ladestrom für den Kondensator C1 in einem weiten Bereich eingestellt werden. Bis auf die technologiebedingten Verluste in der Diode D1 wird der Kondensator C1 auf das am Sperrgleichrichter (Sekundärgleichrichter) GR anliegenden Spannungspotential $U_{SpDio}$ aufgeladen. Der Kondensator C2 wird durch das am Kondensator C1 anliegende Spannungspotential über die Induktivität L2 und einer weiteren Diode D2 geladen. Da es sich hier um einen weiteren Schwingkreis handelt der aus der Induktivität L1 und einer Serienschaltung aus den Kapazitäten C1 und C2 gebildet ist, ist auch diese Umladung bis auf die Verluste bedingt durch die Dioden bzw. den ohmschen Widerstand in der Drossel nahezu verlustfrei. Durch den Kondensator C2 kann zudem noch die Welligkeit bzw. die Hochlaufgeschwindigkeit der erzeugten Hilfsspannung dimensioniert werden.

$$U_H = U_{SpDio} - 2U_d + U_A$$

$U_H$ : Hilfsspannung,
$U_{SpDio}$: Sperrspannung am Sekundärgleichrichter,
$U_d$ : Durchlaßspannung an den Dioden D1, D2 und
$U_A$ : Ausgangsspannung am Konverter.

Im Gegensatz zu der unter Figur 1 beschriebenen Schaltung gehen hier nur geringe ohmsche Verluste bzw. keine zeitliche Abhängigkeit bei der erzeugten Hilfsspannung $U_H$ mit ein. Die erzeugte Hilfsspannung $U_H$ steht niederohmig zur Verfügung. Die erzeugte Hilfsspannung $U_H$ erreicht bei der unter der Figur 2 gezeigten Schaltungsanordnung fast die theoretisch angegebene Höhe des Spannungspotentials.

Ist die Kapazität des Kondensators C2 größer als die Kapazität des Kondensators C1, so hat dies nur einen Einfluß auf die Welligkeit der Ausgangsspannung $U_H$, bzw. auf die Hochlaufgeschwindigkeit für die erzeugte Hilfsspannung $U_H$ und nicht auf die Resonanzfrequenz bei der Hilfsspannungserzeugung. Beim Laden ist der Kondensator C2 durch die Diode D2 entkoppelt. Durch die in der Schaltungsanordnung verwendeten Kondensatoren C1 und C2 ergibt sich eine Gesamtkapazität $C_{ges}$ (C1 in Reihe mit C2). Ist C2 » C1 so ist die Gesamtkapazität $C_{ges}$ ungefähr C1 und somit wird beim Umladen die Resonanzfrequenz nur durch C1 bestimmt.

Bei der in Fig. 2b abgebildeten Schaltungsanordnung ist der Kondensator C2 in Reihe mit der Diode D2 und parallel zur Diode D1 geschaltet. Die Ausgangsspannung $U_H$ setzt sich aus der Spannung UA am Kondensator CA, an dem die Ausgangsspannung des Konverters abgegriffen werden kann und aus dem am Kondensator C2 anliegendem Spannungspotential $U_{C2}$ zusammen.

$$U_H = U_A + U_{C2}$$

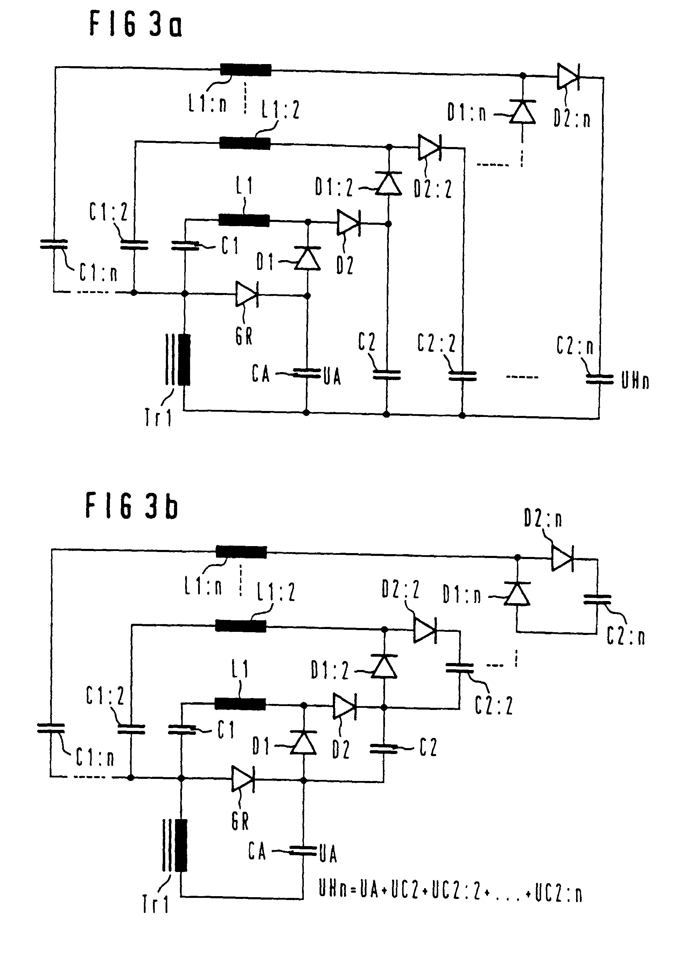

Reicht die Höhe der erzeugten Spannung nicht aus, so kann die unter Figur 2a und Figur 2b gezeigte Schaltungsanordnung kaskadiert werden. Eine Kaskadierung der die unter Figur 2a dargestellten Schaltungsanordnung ist beispielsweise für einen Sperrwandler in der Figur 3a und Figur 3b dargestellt. Die Schaltungsanordnung aus Fig. 2a ist dabei in der Art und Weise weitergebildet, daß an die Kathode der Diode D2 eine weitere Diode $D_{1:2}$ mit ihrer Anode angeordnet ist. An der Kathode der Diode $D_{1:2}$ ist dann sowohl ein weiterer Serienschaltkreis, bestehend aus $L_{1:2}$ und $C_{1:2}$, parallel zum Serienschwingkreis L1, C1, als auch eine weitere Serienschaltung, bestehend aus Diode $D_{2:2}$ und Kondensator $C_{2:2}$, angeschlossen. Eine weitere Kaskadierung kann dadurch erreicht werden, daß wiederum an der Kathode der weiteren Diode $D_{1:2}$ entsprechend der vorhergehend beschriebenen Schaltungserweiterung ein Serienschwingkreis, gebildet aus einer Kapazität $C_{1:n}$ und Induktivität $L_{1:n}$, parallel zum Ursprungsschwingkreis $L_1$, $C_1$ und eine weitere Serienschaltung bestehend aus einer Diode $D_{2:n}$ und einer Kapazität $C_{2:n}$, parallel angeordnet.

Als Hilfs-Ausgangsspannung erhält man:

$$U_{Hn} = U_A + n(U_{SpDio} - 2U_d)$$

In Fig. 3b ist eine Kaskadierung der in Fig. 2b dargestellten Schaltungsanordnung abgebildet. Bei dieser Schaltungsweiterbildung wird die Diode $D_{1:2}$ mit ihrer Anode zwischen der Kathode der Diode D2 und dem Kondensator C2 angeschlossen. An der Kathode der Diode $D_{1:2}$ ist dann parallel zum Serienschwingkreis ein weiterer Serienschwingkreis, bestehend aus einem Kondensator $C_{1:n}$ und einer Induktivität $L_{1:n}$, sowie eine weitere Serienschaltung, bestehend aus der Diode $D_{2:2}$ und eine Kapazität $C_{2:2}$, parallel zur Diode $D_{1:2}$ geschaltet. Diese Schaltungserweiterung kann wie in Figur 3b dargestellt beliebig oft wiederholt werden.

Als Hilfs-Ausgangsspannung ergibt sich bei einer Schaltungsanordnung nach Fig. 3b:

$$U_{Hn} = U_A + U_{C2} + U_{C2:2} + ... + U_{C2:n}$$

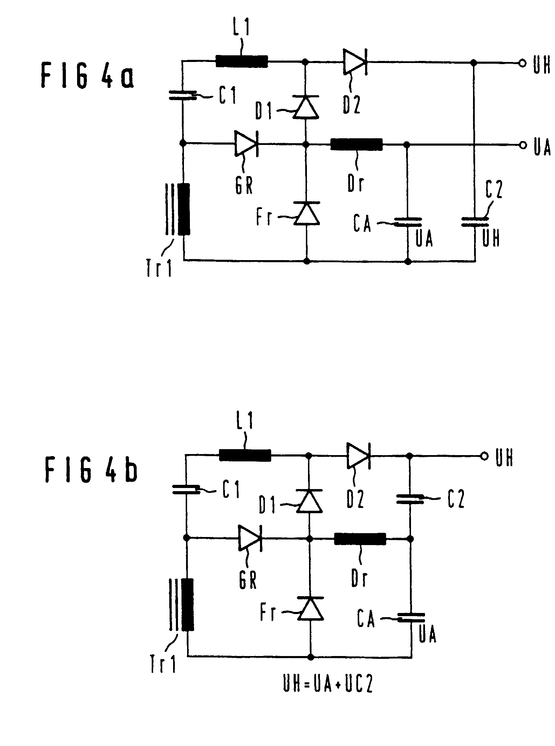

Eine bei einem Durchflußwandler bevorzugte Schaltungsanordnung zur Hilfsspannungserzeugung ist in Figur 4a dargestellt.

Um eine Sättigung des Übertragers zu verhindern, muß eine während der Flußphase im Kern gespeicherte magnetische Energie während der Sperrphase entnommen werden. Dies wird im allgemeinen mit einer Sinusabmagnetisierung, bzw. durch eine Abmagnetisierungswicklung erreicht. Das bei der Abmagnetisierung entstehende Spannungspotential liegt auch an der Sekundärgleichrichterdiode GR an. Diese Spannung wird durch die unter Figur 4a, 4b dargestellten Schaltungsanordnung genutzt, d.h., daß die im Kern des Übertragers gespeicherte Energie an die Sekundärseite des Übertragers abgegeben wird.

Ausgehend von der Sekundärseite eines Übertragers Tr1 ist an dessen ersten Anschluß die Anode einer Flußdiode GR und an der Kathode von dieser die Kathode einer Freilaufdiode Fr angeordnet. Die Anode der Freilaufdiode ist mit dem zweiten Anschluß des Übertragers verbunden. Parallel zur Freilaufdiode FR ist eine Serienschaltung, bestehend aus einer Drossel Dr und einem Kondensator CA, angeordnet. An die Diode D1, deren Anode mit der Kathode der Flußdiode GR und der Freilaufdiode Fr verbunden ist, ist zum einen über eine erste Serienschaltung aus L1, C1 eine Verbindung mit, dem ersten Anschluß des Übertrages und zum anderen über eine weitere Serienschaltung, bestehend aus einer Diode D2 und einer Kapazität C2, eine Verbindung zum zweiten Anschluß des Übertragers hergestellt.

Bei der in Fig. 4b gezeigten Schaltungsanordnung ist zur Kapazität CA eine Kapazität C2 in Reihe angeordnet. Die Serienschaltung aus Drossel Dr und Kapazität CA entfällt gegenüber der in Fig. 4a gezeigten Schaltungsanordnung. Anstatt der Serienschaltung wird zwischen der Kathode der Flußdiode und den Kapazitäten C2 und CA eine Drossel Dr angeordnet.

Die sich aus der Schaltungsanordnung ergebende Hilfsspannung UH setzt sich aus dem Spannungspotential UA an der Kapazität CA und dem Spannungspotential UC2 an der Kapazität C2 zusammen.

$$UH = UA + UC2$$

Durch eine Kaskadierung der in Fig. 4a und Fig. 4b abgebildeten Schaltungsanordnungen ergibt sich für die Schaltung nach Fig. 4a eine Ausgangsspannung

$$U_{Hn} = UA + n(U_{SpDio} - 2U_d)$$

und eine Ausgangsspannung gemäß der Schaltungsanordnung nach Figur 4b

$$U_{Hn} = UA + UC2 + U_{C2:2} + ... + U_{C2:n}.$$

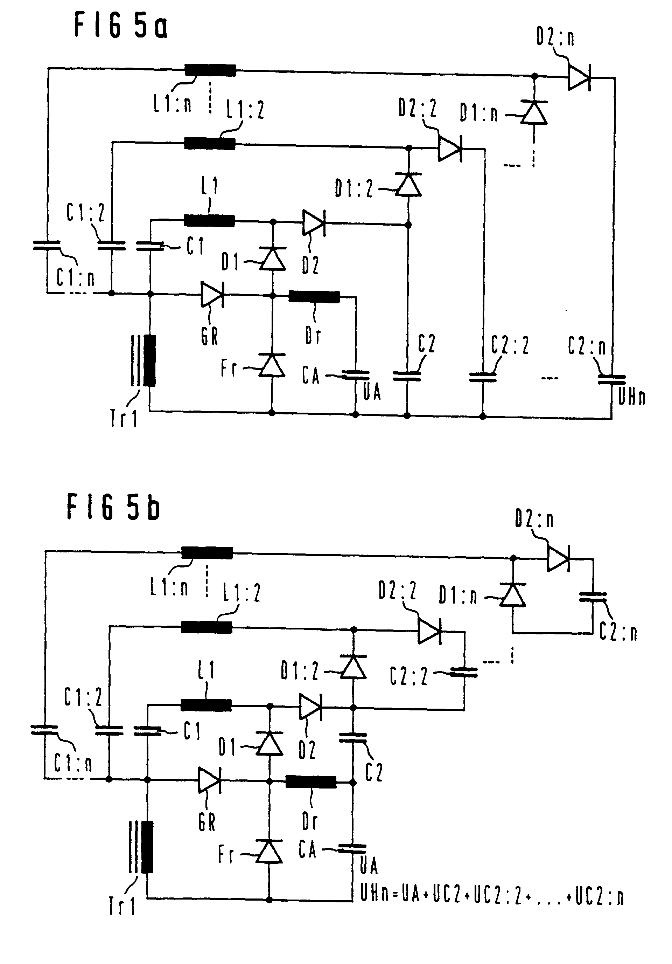

Die entsprechende Schaltungsausgestaltung ist jeweils in den Figuren 5a und 5b wiedergeben.

Bei allen Schaltungsvarianten ist in der Praxis eventuell ein Parallelwiderstand zu Drossel L1 vorzusehen, um deren Eigenresonanz zu bedämpfen.

Die erzeugte Hilfsspannung $U_H$ ist von der Sperrspannung an der Diode GR und damit von der Eingangsspannung des Umrichters abhängig. Soll eine geregelte Ausgangsspannung realisiert werden, so ist dies durch einen nachgeschalteten Regler zu stabilisieren.

Je nach Umrichterdimensionierung ist bei der Verwendung der Schaltung beim Flußwandler eine zusätzliche Drossel in Reihe zu D2 vorzusehen (gilt für die Kaskadierung der Schaltung analog).

**Patentansprüche**

1. Schaltungsanordnung zur Hilfsspannungserzeugung mit einer Reihenschaltung gebildet aus einer ersten Diode (GR) und einer ersten Kapazität (CA), die parallel zur einer Sekundärinduktivität (Tr1) eines Übertragers angeordnet ist, wobei die erste Diode (GR) mit einem ersten Anschluß an einem ersten Anschluß und die erste Kapazität (CA) mit einem zweiten Anschluß der Sekundärinduktivität (Tr1) verbunden ist, und an einem zweiten Anschluß der ersten Diode (GR) eine zweite Diode (D1) mit ihrem ersten Anschluß verbunden ist, wobei am zweiten Anschluß der zweiten Diode (D1) eine Reihenschaltung, gebildet aus einer dritten Diode (D2) und einer zweiten Kapazität (C2), angeordnet ist, die mit einem zweiten Anschluß der Sekundärinduktivität (Tr1) des Übertragers verbunden ist,
**dadurch gekennzeichnet,**
daß zwischen dem ersten Anschluß der Sekudärinduktivität (Tr1) und dem zweiten Anschluß der zweiten Diode (D1) ein Blindwiderstand angeordnet ist.

2. Schaltungsanordnung nach Anspruch 1,
**dadurch gekennzeichnet,**
daß der Blindwiderstand sich aus einer Reihenschaltung aus einer dritten Kapazität (C1) und einer ersten Induktivität (L1) zusammensetzt.

3. Schaltungsanordnung nach einem der vorhergehenden Ansprüche,
   **dadurch gekennzeichnet,**
   daß am zweiten Anschluß der dritten Diode (D2) ein erster Anschluß einer weiteren Diode ($D_{1:n}$) angeordnet ist und am zweiten Anschluß der weiteren Diode ($D_{1:n}$) über eine erste weitere Reihenschaltung, bestehend aus einer weiteren Induktivität ($L_{1:n}$) und einer Kapazität ($C_{1:n}$), eine Verbindung zum ersten Anschluß der Sekundärinduktivität des Übertragers (Tr1) und über eine zweite weitere Reihenschaltung, bestehend aus einer weiteren Diode ($D_{n:n}$) und einer weiteren Kapazität ($C_{n:n}$), eine Verbindung zum zweiten Anschluß der Sekundärinduktivität des Übertragers (Tr1) besteht.

4. Schaltungsanordnung nach Anspruch 3,
   **dadurch gekennzeichnet,**
   daß die zweite weitere Reihenschaltung parallel zur weiteren Diode ($D_{1:2}$) angeordnet ist.

5. Schaltungsanordnung nach einem der vorhergehenden Ansprüche,
   **dadurch gekennzeichnet,**
   daß zwischen dem zweiten Anschluß der ersten Diode (GR) und der ersten Kapazität (CA) eine Drossel eingefügt ist, daß eine Freilaufdiode (Fr) zwischen dem zweiten Anschluß der ersten Diode (GR) und dem zweiten Anschluß der Sekundärinduktivität des Übertragers (Tr1)angeordnet ist.

## Claims

1. Circuit arrangement for auxiliary voltage production having a series circuit which is formed from a first diode (GR) and a first capacitance (CA) and is arranged in parallel with a secondary inductance (Tr1) of a transformer, the first diode (GR) being connected to a first connection of the secondary inductance (Tr1), and the first capacitance (CA) being connected to a second connection of the secondary inductance (Tr1), and a second diode (D1) being connected by its first connection to a second connection of the first diode (GR), a series circuit, which is formed from a third diode (D2) and a second capacitance (C2) and is connected to a second connection of the secondary inductance (Tr1) of the transformer being arranged at the second connection of the second diode (D1),
   characterized
   in that a reactance is arranged between the first connection of the secondary inductance (Tr1) and the second connection of the second diode (D1).

2. Circuit arrangement according to Claim 1,
   characterized
   in that the reactance is composed of a series circuit formed from a third capacitance (C1) and a first inductance (L1).

3. Circuit arrangement according to one of the preceding claims,
   characterized
   in that a first connection of a further diode ($D_{1:n}$) is arranged at the second connection of the third diode (D2), and a connection for the first connection of the secondary inductance of the transformer (Tr1) exists at the second connection of the further diode ($D_{1:n}$) via a first further series circuit comprising a further inductance ($L_{1:n}$) and a capacitance ($C_{1:n}$), and a connection for the second connection of the secondary inductance of the transformer (Tr1) exists via a second further series circuit, comprising a further diode ($D_{n:n}$) and a further capacitance ($C_{n:n}$).

4. Circuit arrangement according to Claim 3,
   characterized
   in that the second further series circuit is arranged in parallel with the further diode ($D_{1:2}$).

5. Circuit arrangement according to one of the preceding claims,
   characterized
   in that an inductor is inserted between the second connection of the first diode (GR) and the first capacitance (CA), and in that a freewheeling diode (Fr) is arranged between the second connection of the first diode (GR) and the second connection of the secondary inductance of the transformer (Tr1).

## Revendications

1. Circuit permettant de produire une tension auxiliaire, comprenant un montage en série formé par une première diode (GR) et un premier condensateur (CA) qui est monté en parallèle avec une résistance inductive secondaire (Tr1) d'un transformateur, la première diode (GR) étant reliée, par une première borne, à une première borne de la résistance inductive secondaire (Tr1) et le premier condensateur (CA) étant relié à une seconde borne de la résistance inductive secondaire (Tr1), et une seconde diode (D1) étant reliée, par sa première borne, à une seconde borne de la première diode (GR), un montage en série formé par une troisième diode (D2) et un second condensateur (C2) relié à une seconde borne de la résistance inductive secondaire (Tr1) du transformateur étant branché à la seconde borne de la seconde diode (D1),
   caractérisé en ce qu'une réactance est branchée entre la première borne de la résistance inductive secondaire (Tr1) et la seconde borne de la seconde diode (D1).

2.  Circuit selon la revendication 1, caractérisé en ce que la réactance est composée d'un montage en série formé par un troisième condensateur (C1) et une première résistance inductive (L1).

3.  Circuit selon l'une des revendications précédentes, caractérisé en ce qu'une première borne d'une diode supplémentaire $(D_{1:n})$ est reliée à la seconde borne de la troisième diode (D2) et il existe, au niveau de la seconde borne de la diode supplémentaire $(D_{1:n})$, une liaison avec la première borne de la résistance inductive secondaire du transformateur (Tr1) réalisée par le biais d'un premier montage en série supplémentaire formé par une résistance inductive supplémentaire $(L_{1:n})$ et un condensateur $(C_{1:n})$, et une liaison avec la seconde borne de la résistance inductive secondaire du transformateur (Tr1) réalisée par le biais d'un second montage en série supplémentaire formé par une diode supplémentaire $(D_{n:n})$ et un condensateur supplémentaire $(C_{n:n})$.

4.  Circuit selon la revendication 3, caractérisé en ce que le second montage en série supplémentaire est en parallèle avec la diode supplémentaire $(D_{1:2})$.

5.  Circuit selon l'une des revendications précédentes, caractérisé en ce qu'une bobine est insérée entre la seconde borne de la première diode (GR) et le premier condensateur (CA), en ce qu'une diode arbitraire (Fr) est branchée entre la seconde borne de la première diode (GR) et la seconde borne de la résistance inductive secondaire du transformateur (Tr1).

FIG 1

FIG 2a

FIG 2b

UH = UA + UC2

## FIG 3a

## FIG 3b

$$UHn = UA + UC2 + UC2:2 + \ldots + UC2:n$$

FIG 4a

FIG 4b

UH=UA+UC2

## F I G 5a

## F I G 5b

$$UHn = UA + UC2 + UC2:2 + \ldots + UC2:n$$